# EUROPÄISCHE PATENTANMELDUNG

(11) **EP 3 783 236 A1**
(43) Veröffentlichungstag der Anmeldung: **24.02.2021**
(21) Anmeldenummer: 20186456.8
(22) Anmeldetag: 17.07.2020
(51) Int. Cl.: F16B 41/00

(54) **MONTAGEVORRICHTUNG**

(30) Priorität: 20.08.2019 DE 102019122378
(71) Anmelder: Illinois Tool Works Inc., Glenview, IL 60025 (US)
(72) Erfinder: Becker, Sven, Glenview, IL 60025 (US); Santos, Nelson, Glenview, IL 60025 (US); Da Rocha, Bruno, Glenview, IL 60025 (US)
(74) Vertreter: HGF

(57) **Zusammenfassung**

Montagevorrichtung, insbesondere zum Montieren von platten- oder scheibenartiger Elemente an einem Trägerelement, wobei die Montagevorrichtung einen Schraubbolzen und eine Montagehilfshülse umfasst, wobei die Montagehilfshülse zylindrisch ausgebildet ist und den Schraubbolzen teilbereichsweise umgibt, wobei sich die Montagehilfshülse am Schraubbolzen mit Abstützelementen axial abstützt und Federelemente vorhanden sind, welche den Umfang der Montagehilfshülse teilbereichsweise über den Durchmesser einer Aufnahmebohrung in einem plattenartigen Element vergrößern und dazu ausgebildet sind, den Schraubbolzen hierdurch in einer Bohrung festzulegen.

## Beschreibung

Die Erfindung betrifft eine Montagevorrichtung nach dem Oberbegriff des Anspruchs 1.

Es ist bekannt, platten- oder scheibenartige Gegenstände an Trägergegenstände anzuschrauben, wobei üblicherweise der plattenartige Gegenstand zum Beispiel ein Montageloch aufweist, um einen Schraubbolzen hindurchzuschieben, der anschließend den plattenartigen Gegenstand mit dem Trägergegenstand verschraubt.

Üblicherweise werden die plattenartigen Gegenstände hierzu an dem Trägergegenstand angesetzt oder festgehalten und anschließend ein Schraubbolzen durch das Montageloch des plattenartigen Gegenstandes in eine Montagebohrung des Trägergegenstandes hindurchgeführt und anschließend festgeschraubt.

Insbesondere bei beengten Bauräumen führt dies zu langen Montagezeiten, da für den Monteur nicht ersichtlich ist, ob die entsprechenden Montagelöcher wirklich in Flucht sind.

Dies betrifft beispielsweise auch den Motorenbau, wenn Keilriemenscheiben, Zahnriemenscheiben, Steuerkettenscheiben oder Torsionsdämpfer montiert werden.

Torsionsdämpfer sind Bauteile, die insbesondere bei Kraftfahrzeugen mit Start-Stopp-Automatik zum Beispiel auf die Kurbelwelle aufgeschraubt werden, um Schwingungen im Abtrieb zu dämpfen.

Insbesondere hierbei ist aufgrund des beschränkten Zugangsraumes es oft schwierig, eine schnelle Montage zu erreichen.

Aufgabe der Erfindung ist es, eine Montagevorrichtung zu schaffen, mit der die Montage einfach und schnell gelingt.

Die Aufgabe wird mit den Merkmalen des Anspruchs 1 gelöst.

Vorteilhafte Weiterbildungen sind abhängigen Unteransprüchen gekennzeichnet.

Erfindungsgemäß werden Schraubbolzen derart mit temporären Haltemitteln ausgestattet, dass die Bolzen an einem plattenartigen oder scheibenartigen Gegenstand vormontiert werden können und anschließend das plattenartige oder scheibenartige Element an das oder die Montagelöcher im Trägergegenstand angesetzt. Hierbei ist vorgesehen, dass die erfindungsgemäßen Montagemittel, bestehend aus der Halteeinrichtung und dem Bolzen, auf der Seite überstehen, auf der die Verschraubung mit dem Trägerelement erfolgt. Hierdurch ist die Findung der Schrauböffnungen erheblich vereinfacht, da das plattenartige oder scheibenartige Element die Sicht auf die Schraublöcher nicht verstellt.

Gemäß der Erfindung wird der Schraubbolzen von einem Haltemittel umgeben, welches es erlaubt, den Bolzen bis zu einem ersten Anschlag durch ein plattenähnliches oder scheibenähnliches Element hindurchzuschieben.

Das Haltemittel kann dabei eine Hülse sein, die um den Schraubbolzen herum angeordnet ist und nach außen federnde Mittel besitzt, mit der die Hülse nach dem teilweisen Einstecken die Position sichert.

Darüber hinaus kann erfindungsgemäß die Hülse sich am Bolzen derart abstützen, dass nach einer Vormontage der Hülse am Bolzen die Hülse nicht ohne Weiteres vom Bolzen abziehbar ist.

Die Erfindung betrifft eine Montagevorrichtung, insbesondere zum Montieren von platten- oder scheibenartiger Elemente an einem Trägerelement, wobei die Montagevorrichtung einen Schraubbolzen und eine Montagehilfshülse umfasst, wobei die Montagehilfshülse zylindrisch ausgebildet ist und den Schraubbolzen teilbereichsweise umgibt, wobei sich die Montagehilfshülse am Schraubbolzen mit zumindest einem Abstützelement axial abstützt und zumindest ein Federelement vorhanden ist, welche den Umfang der Montagehilfshülse teilbereichsweise über den Durchmesser einer Aufnahmebohrung in einem plattenartigen Element vergrößert und dazu ausgebildet ist, den Schraubbolzen hierdurch in einer Bohrung festzulegen.

Die Erfindung betrifft ferner eine Montagevorrichtung bei der die Federelemente Blattfederelemente sind oder nach außen ausgebogene Federzungen.

Von Vorteil ist es wenn die Mittel zum Abstützen der Montagehilfshülse am Schraubbolzen umlaufende Kanten und/oder Federzungen sind, wobei am Schraubbolzen eine umlaufende Stufe als Abstützgegenelement und ein axiales Gewindeende eines Gewindes als Gegenabstützelement vorhanden sind.

Vorteilhaft ist es ein oder mehrere Blattfederelemente an der Montagehilfshülse ausgebildet sind.

Bei einer weiteren vorteilhaften Ausführungsform können eine Mehrzahl von Blattfederelementen in einer oder mehreren axialen Ebenen am Umfang verteilt angeordnet sein.

Insbesondere können im Bereich einer Öffnung der Montagehilfshülse im Bereich der umlaufenden Kante die Montagehilfshülse kegelstumpfartig nach außen verbreiternd federnde Elemente freigeschnitten und ausgebogen sein und/oder zusätzliche Federzungen nach außen oder innen gebogen vorhanden sein.

Von Vorteil ist es, wenn sich die kegelstumpfartigen Elemente und die Federzungen am Umfang verteilt abwechseln.

Zudem ist es vorteilhaft, wenn an einem den Elementen gegenüberliegenden Ende benachbart zu einer umlaufenden Kante ein oder mehrere Blattfederelemente freigeschnitten und ausgebogen sind.

Die Erfindung wird anhand einer Zeichnung beispielhaft erläutert. Es zeigen dabei:
- Figur 1:: die erfindungsgemäße Montagevorrichtung in vollständigem Zustand;
- Figur 2:: die Komponenten der Montagevorrichtung nach Figur 1;

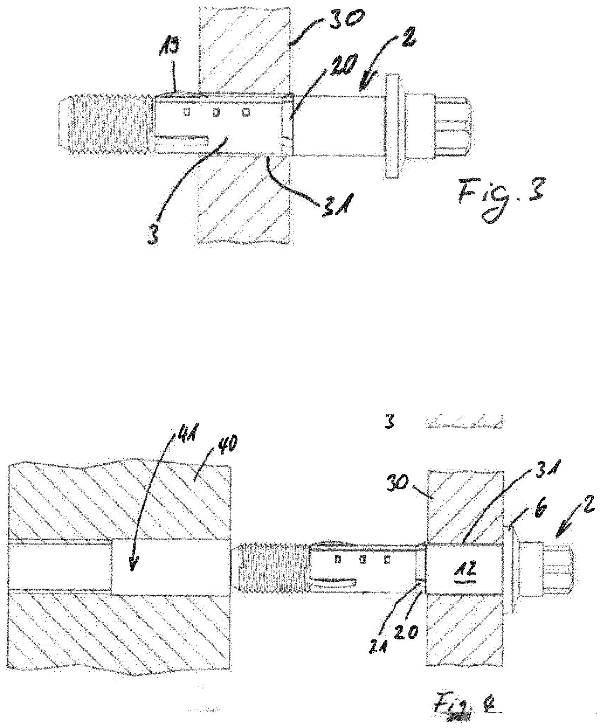

- Figur 3:: die erfindungsgemäße Montagevorrichtung in einer vormontierten Position an einem scheiben- oder plattenartigen Gebilde;
- Figur 4:: die Montagevorrichtung in montagefertigem Zustand;
- Figur 5:: die Montagevorrichtung fertig montiert, ein plattenartiges Element an einem Trägerelement haltend;
- Figur 6:: eine weitere Ausführungsform der erfindungsgemäßen Montagevorrichtung;

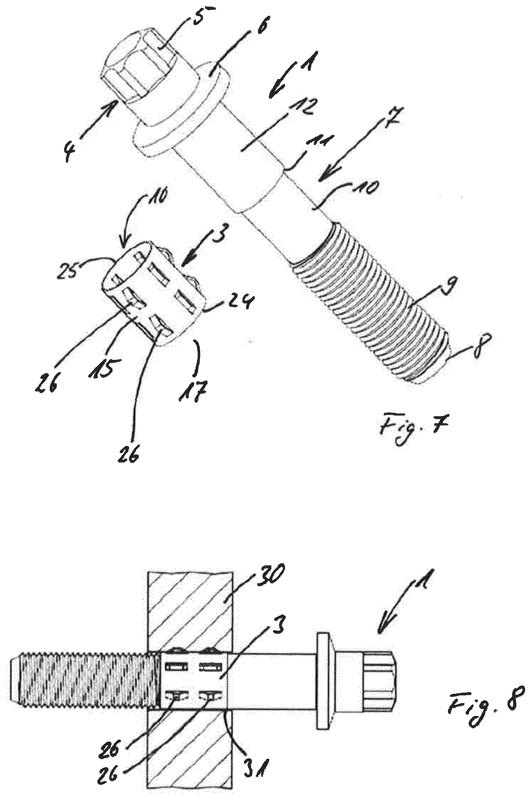

- Figur 7:: die Komponenten der Montagevorrichtung nach Figur 6;
- Figur 8:: die Montagevorrichtung nach Figur 6 in einer vormontierten Position;

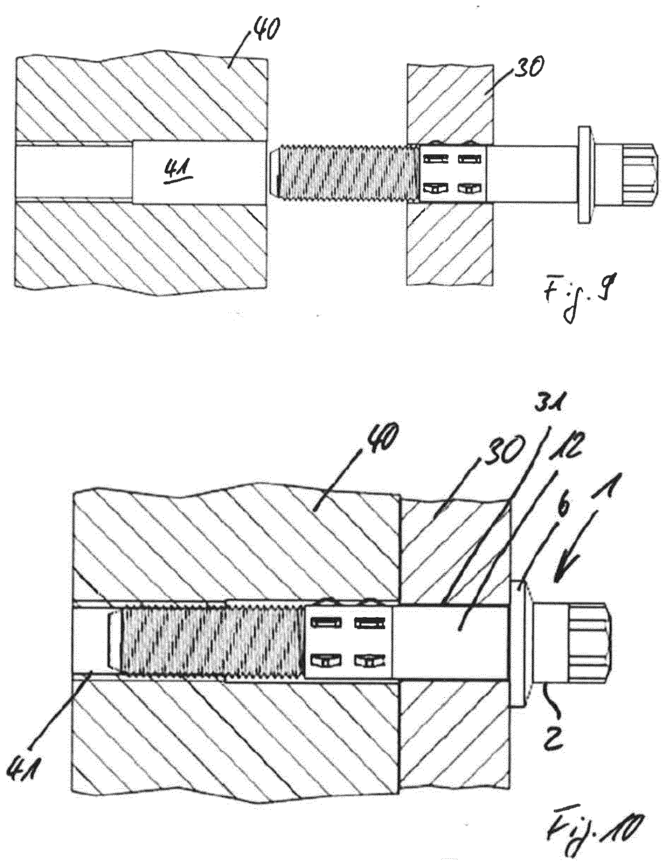

- Figur 9:: die Montagevorrichtung nach Figur 6 im montagefertigen Zustand;
- Figur 10:: die Montagevorrichtung nach Figur 6 in fertig montiertem Zustand.

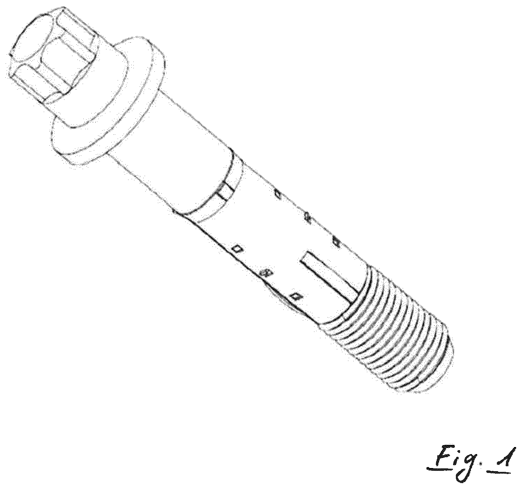

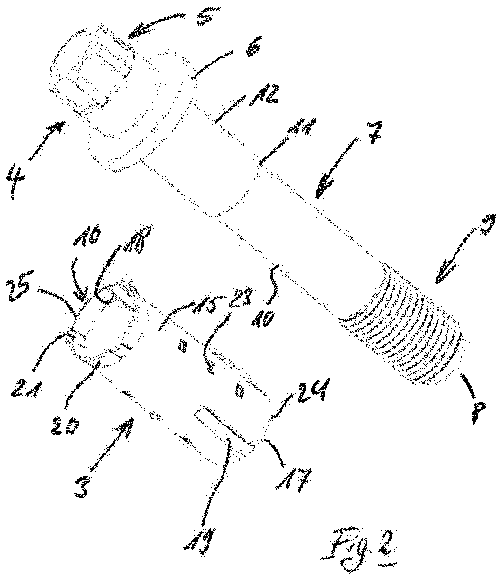

Eine erfindungsgemäße Montagevorrichtung (Figur 1, Figur 2) umfasst einen Schraubbolzen 2 und eine Montagehilfshülse 3.

Der Schraubbolzen 2 besitzt einen Bolzenkopf 4 mit einem Antrieb 5 bzw. einer Antriebskontur 5 sowie gegebenenfalls eine plattenartige Verbreiterung 6 als Anschlagelement beim Einschrauben.

Zudem besitzt der Schraubbolzen 2 einen Schraubbolzenschaft 7.

Der Schraubbolzenschaft umfasst an einem freien, einzuschraubenden Ende 8 ein Gewinde 9. Das Gewinde 9 erstreckt sich hierbei beispielsweise über ein Viertel bis ein Drittel der Gesamtlänge des Schafts 7. An das Gewinde 9 anschließend folgt ein glatter Hülsenaufnahmebereich 10. Der Hülsenaufnahmebereich 10 erstreckt sich beispielsweise über die Hälfte der Länge des Schaftes.

Am diametral dem Gewinde 9 gegenüberliegenden Bereich des Hülsenaufnahmebereichs 10 erweitert sich der Schraubenschaft 7 mit einer Stufe 11 zu einem weiteren glatten Bereich 12. Der weitere, glatte Bereich 12 und das Gewinde 9 haben insbesondere den gleichen Außendurchmesser.

Die Montagehilfshülse 3 ist ein im Wesentlichen zylindrisches Bauteil mit einer Zylindermantelwandung 15 und zwei axialen Endbereichen 16, 17.

Die Montagehilfshülse 3 kann aus einem Metall und/oder einem Kunststoff ausgebildet sein und kann dünnwandig ausgebildet mit einem Längsschlitz 18 ausgebildet sein.

An einem freien Ende 17 der Montagehilfshülse 3 sind eine Mehrzahl von Blattfederelementen aus der Mantelwandung 15 ausgestanzt und nach außen ausgebogen, so dass im Bereich der Blattfederelemente 19 der Durchmesser der Montagehilfshülse partiell vergrößert ist.

Am gegenüberliegenden zweiten Ende der Montagehilfshülse 3 ist eine Mehrzahl von der Hülse leicht konisch verbreiternden Elementen 20 vorgesehen, wobei die Elemente 20 kegelstumpfsegmentartig nach außen vorstehen.

Beispielsweise sind drei der Elemente 20 vorhanden, welche von drei kurzen Federzungen 21 unterbrochen werden, wobei die Federzungen 21 und die Elemente 20 alternierend am Umfang angeordnet sind und insbesondere die Federzungen 21 stärker nach außen vorstehen. Zudem können in der Mantelwandung Freisparungen ausgestanzt sein, wobei kurze Abstandselemente 23 nach außen und innen alternierend vorstehen.

Die Montagehilfshülse 3 wird am Schraubbolzen 2 zur Komplettierung der Montagevorrichtung 1 derart angeordnet, dass das zweite Ende voran die Montagehilfshülse über den Bolzen übergezogen wird oder mit Hilfe des Schlitzes 18 um den glatten Bereich 10 herumgebogen wird.

Die Montagehilfshülse 3 hat dabei eine axiale Länge, die dem Aufnahmebereich 10 entspricht.

Durch den Schlitz 18 kann die Montagehilfshülse 3 elastisch nachgeben und schließt sich so eng um den Hülsenaufnahmebereich 10, dass eine umlaufende Kante 24 sich am Ende des Gewindes 9 abstützt, während eine umlaufende Kante 25 der zweiten Öffnung 16 sich an der Stufe 11 abstützt. Gegebenenfalls können sich im Bereich der umlaufenden Kante 25 der zweiten Öffnung auch nur eine oder mehrere der kleinen Federzungen an der Stufe 11 abstützen.

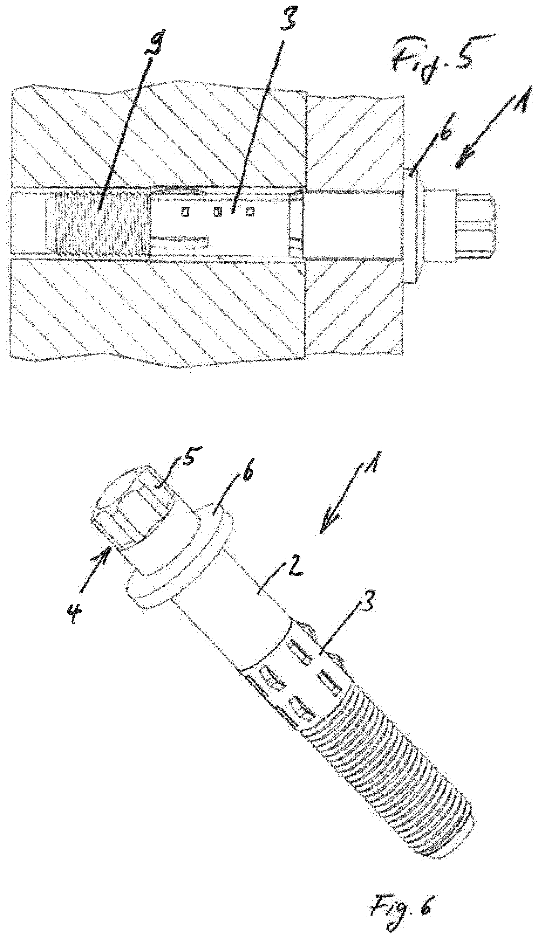

In dieser montierten Position der Montagevorrichtung 1 kann die Montagevorrichtung 1 an einem plattenartigen oder scheibenartigen Element 30 vormontiert werden. In der Vormontagestellung durchgreift der Bolzen 2 eine Bohrung 31 im plattenartigen Element, wobei die Länge des Bolzens 2 und die Länge der Montagehilfshülse 3 hierbei so gewählt ist, dass die Montagehilfshülse 3 mit den Blattfederelementen 19 eine Lochöffnung weitestgehend passiert, während die Elemente 20, welche im Bereich der Stufe 11 vorstehen, ein weiteres Hineinschieben erschweren. Somit wird die Montagevorrichtung 1 durch die Blattfederelemente 19 und die umlaufenden vorstehenden Elemente 20 mit Federkraft am plattenförmigen Element gehalten. Für die Endmontage wird die Montagevorrichtung vollständig in die Bohrung 31 eingeschoben, bis die Verbreiterung 6 an einer die Öffnung 31 umgebenden Wandung anliegt. Die Montagevorrichtung ist hierbei so bemessen, dass der weitere glatte Bereich 12 des Schraubbolzens 2 hierbei die Öffnung 31 bzw. Bohrung 31 vorzugsweise vollständig durchgreift und die Elemente 20 bzw. Federzungen 21 hinter der Bohrung 31 ausfedern. Der maximale Grad der Ausfederung der Elemente 20 bzw. Federzungen 21 ist so bemessen, dass die Montagehilfshülse 3 im Durchmesser größer wird als die Bohrung 31, so dass ein Zurückziehen des Bolzens 2 nicht möglich ist, weil die Elemente 20, 21 die Rückzugbewegung sperren im Zusammenwirken mit der umlaufenden Kante 24, welche sich gegen eine Auszugskraft am Gewinde abstützt. Das plattenartige Element 30 kann nun zusammen mit der Montagevorrichtung 1 in eine Montagegewindebohrung 41 eines Trägerelements 40 eingeschraubt werden (Figur 5).

Bei einer weiteren vorteilhaften Ausführungsform der Montagevorrichtung 1 (gleiche Teile sind mit gleichen Bezugszeichen versehen) ist das Gewinde 9 beispielsweise länger von dem freien Ende 8 beginnend länger ausgebildet und der glatte Bereich, der die Hülse aufnimmt, also der Hülsenaufnahmebereich 10 kürzer ausgebildet. Bei dieser Montagevorrichtung wird eine verkürzte Montagehilfshülse verwendet, wobei die Montagehilfshülse 3 eine Mehrzahl von kurzen Blattfederelementen 26 besitzt, welche aus der Mantelwandung 15 ausgestanzt und nach außen vorgebogen sind. Auf einer radialen Ebene ist vorzugsweise eine Mehrzahl von Blattfederelementen 26 vorhanden, wobei die Blattfederelemente 26 zudem in mehreren axialen Reihen angeordnet sein können. Beispielsweise sind zwei Reihen von Blattfederelementen 26 vorhanden, wobei jedoch auch eine oder mehr als zwei Reihen vorhanden sein können.

Es versteht sich für den Fachmann, dass auch bei einer längeren Hülse entsprechend mehr Reihen angeordnet sein können.

Auch bei dieser Montagehilfshülse 3 ist ein Längsschlitz (nicht gezeigt) vorhanden, der ein Überstreifen über den Bolzen 2 ermöglicht, so dass die Montagehilfshülse 3 in den glatten Bereich 3 hineinschnappen kann. Mit den umlaufenden Kanten 24, 25 der Öffnungen 16, 17 verriegelt die Montagehilfshülse 3 an der Stufe 11 einerseits und am axialen Ende des Gewindes 9 andererseits.

Bei dieser Ausführungsform wird die Montagevorrichtung 1 an einem plattenartigen Element 30 in dessen Bohrung 31 so angeordnet, dass die Montagehilfshülse 3 sich vollständig innerhalb der Bohrung 31 befindet. Die Blattfederelemente 26 stützen sich hierbei an einer Bohrungswandung der Bohrung 31 ab und halten die Montagevorrichtung 1 durch einen Federkraft-gestützten Reibschluss in der Öffnung 31.

Bei dieser Ausführungsform wird diese Position beibehalten, bis die Komponenten, nämlich das plattenartige Element 30 und das Trägerelement 40 zusammengefügt werden.
Nach dem Einschrauben des Bolzens 1 in das Trägerelement 40 befindet sich wie bei der ersten Ausführungsform die Montagehilfshülse 3 vollständig innerhalb der Bohrung 41 und der glatte Bereich 12 der Montagevorrichtung 1 bzw. des Bolzens 2 ist vollständig oder ein geringes Stück axial vorstehend in der Bohrung 31 gelagert. Vorzugsweise liegt auch hier der Anschlag 6 an einer die Öffnung 31 begrenzenden Wandung an.

Bei der Erfindung ist von Vorteil, dass eine Montagevorrichtung geschaffen wird, die mit einfachen, aber wirkungsvollen Mitteln es gewährleistet, dass ein Schraubbolzen so an einem zu montierenden plattenartigen Element vormontiert werden kann, dass die Anordnung eines solchen plattenartigen Elements auch bei begrenztem Bauraum eine vereinfachte Montage dadurch erlaubt, dass ein Schraubbolzen beidseitig aus einem plattenartigen Element so vorsteht, dass eine erleichterte Findung der Montageöffnungen gewährleistet ist.

Erfindungsgemäß wird dies dadurch erreicht, dass federnde Elemente an der Montagehilfshülse vorgesehen sind, welche den Bolzen in der Bohrung eines plattenartigen Elementes im Wesentlichen durch Reibschluss festlegen.

## Patentansprüche

1. Montagevorrichtung, insbesondere zum Montieren von platten- oder scheibenartiger Elemente an einem Trägerelement, wobei die Montagevorrichtung einen Schraubbolzen (2) und eine Montagehilfshülse (3) umfasst, wobei die Montagehilfshülse (3) zylindrisch ausgebildet ist und den Schraubbolzen (2) teilbereichsweise umgibt, wobei sich die Montagehilfshülse (3) am Schraubbolzen (2) mit zumindest einem Abstützelement (24, 25, 21, 20) axial abstützt und zumindest ein Federelement (19, 26) vorhanden ist, welches den Umfang der Montagehilfshülse (3) teilbereichsweise über den Durchmesser einer Aufnahmebohrung (31) in einem plattenartigen Element (30) vergrößert und dazu ausgebildet ist, den Schraubbolzen (2) hierdurch in einer Bohrung (31) festzulegen.

2. Montagevorrichtung nach Anspruch 1, **dadurch gekennzeichnet, dass** die Federelemente (20, 21, 26, 19) Blattfederelemente sind oder nach außen ausgebogene Federzungen.

3. Montagevorrichtung nach einem der vorhergehenden Ansprüche, **dadurch gekennzeichnet, dass** die Mittel zum Abstützen der Montagehilfshülse (3) am Schraubbolzen (2) umlaufende Kanten (24, 25) und/oder Federzungen (21) sind, wobei am Schraubbolzen (2) eine umlaufende Stufe (11) als Abstützgegenelement und ein axiales Gewindeende eines Gewindes (9) als Gegenabstützelement vorhanden sind.

4. Montagevorrichtung nach einem der vorhergehenden Ansprüche, **dadurch gekennzeichnet, dass** ein oder mehrere Blattfederelemente (19, 26) an der Montagehilfshülse (3) ausgebildet sind.

5. Montagevorrichtung nach einem der vorhergehenden Ansprüche, **dadurch gekennzeichnet, dass** eine Mehrzahl von Blattfederelementen (19, 26) in einer oder mehreren axialen Ebenen am Umfang verteilt angeordnet sind.

6. Montagevorrichtung nach einem der vorhergehenden Ansprüche, **dadurch gekennzeichnet, dass** im Bereich einer Öffnung (16) der Montagehilfshülse (3) im Bereich der umlaufenden Kante (25) die Montagehilfshülse (3) kegelstumpfartig nach außen verbreiternd federnde Elemente (20) freigeschnitten und ausgebogen sind und/oder zusätzliche Federzungen (21) nach außen oder innen gebogen vorhanden sind.

7. Montagevorrichtung nach einem der vorhergehenden Ansprüche, **dadurch gekennzeichnet, dass** sich die kegelstumpfartigen Elemente (20) und die Federzungen (21) am Umfang verteilt abwechseln.

8. Montagevorrichtung nach einem der vorhergehenden Ansprüche, **dadurch gekennzeichnet, dass** an einem den Elementen (20, 21) gegenüberliegenden Ende (17) benachbart zu einer umlaufenden Kante (24) ein oder mehrere Blattfederelemente (19) freigeschnitten und ausgebogen sind.
